# EUROPEAN PATENT SPECIFICATION

(11) **EP 0 523 829 B1**
(45) Date of publication and mention of the grant of the patent: **27.11.1996**
(21) Application number: 92304015.8
(22) Date of filing: 05.05.1992
(51) Int. Cl.: C01B 39/48

(54) **A method of synthesizing zeolite beta**
Verfahren zur Herstellung von Betazeolith
Méthode de synthèse de zéolite beta

(30) Priority: 14.06.1991 US 715270; 14.06.1991 US 715189; 14.06.1991 US 715190
(43) Date of publication of application: 20.01.1993
(73) Proprietor: MOBIL OIL CORPORATION, Fairfax, Virginia 22037-0001 (US)
(72) Inventor: Absil, Robert Peter Leonard, Mantua, New Jersey 08051 (US); Kowalski, Jocelyn Anne, Clarksboro, New Jersey 08020 (US); Herbst, Joseph Anthony, Turnersville, New Jersey (US); Rubin, Mae Koenig,, Bala Cynwdy, Pennsylvania 19004 (US)
(74) Representative: Colmer, Stephen Gary

(56) References cited:
- EP-A- 0 002 900
- EP-A- 0 164 939
- US-A- 4 377 502
- CHEMICAL ABSTRACTS, vol. 112, no. 12, 19 March 1990, Columbus, Ohio, US;
- abstract no. 108768B, SCOTT ET AL: 'the role of triethanolamine in zeolite crystallization' page 690 ;column RIGHT ; &Zeolites,vol. 10,no. 1, pages 44-50,1990.

## Description

This invention relates to a method of synthesizing zeolite Beta.

Zeolite Beta and its characteristic X-ray diffraction pattern are described in U.S. Patents Nos. 3,308,069 and RE 28,341 both to Wadlinger. In Wadlinger, the zeolite Beta is synthesized using tetrethylammonium hydroxide as a directing agent and the resultant zeolite is described as having a silica-to-alumina ratio of 10 to 100 and possibly as high as 150. The description of the Wadlinger patents is silent as to the crystallite size of the zeolite Beta. Typically, however, the zeolite Beta produced by the Wadlinger method is a small crystal material with a size ranging from 0.01 to 0.05 microns. For certain applications, however, large crystal zeolites have been found to possess distinct advantages over the smaller crystal zeolites.

Highly silicious zeolite Beta described as having silica-to-alumina ratios within the range of 20-1000 is disclosed in Valyocsik et al, U.S. Patent No. 4,923,690. To achieve the high silica-to-alumina ratio the zeolite is only partly crystallized. As the zeolite becomes more fully crystalline, the silica-to-alumina ratio decreases. This is demonstrated in the examples which show achievement of highly silicious zeolite Beta at between 30 and 50% crystallinity. It would be desirable to achieve a highly silicious zeolite Beta which is fully crystalline.

An object of the present invention to provide a method of synthesizing zeolite Beta which can produce a highly crystalline zeolite having a large crystal size and a broad range of silica to alumina ratios.

Accordingly, the invention resides in a method of synthesizing zeolite which comprises forming a synthesis mixture containing sources of alkali metal cation, tetraethylammonium cation, an oxide of aluminum, an oxide of silicon, a tertiary alkanolamine and water and having a composition, in terms of mole ratios within the following ranges:

| | |
|---|---|
| SiO₂/Al₂O₃ | = 20 - 1000 |
| OH⁻/SiO₂ | = 0.1 - 0.8 |
| R/SiO₂ | = 0.3 - 1.0 |
| H₂O/SiO₂ | = 5 - 40 |
| M/SiO₂ | = 0.01 - 0.2 |
| X/SiO₂ | = 0.1 - 1.0 |
| wherein R is the tetraethylammonium cation and X is the tertiary alkanolamine, and crystallizing the mixture. | |

The resultant zeolite Beta typically has a silica-to alumina molar ratio of 20 to 1000 and a crystal size of 0.1 to 3 microns. In addition a highly crystalline zeolite Beta can be produced, which means that the zeolite is substantially free of amorphous silica and alumina unlike the partially crystalline zeolite Beta described in U.S. Patent No. 4,923,690. In order to achieve high crystallinity the synthesis should be carried out until the product is at least about 70% crystalline, ranging from 80% to 130% crystalline, preferably at least about 90% crystalline as determined by traditional X-ray analysis techniques.

The reaction mixture employed in the process of the invention includes sources of alkali metal cations, an oxide of silicon, an oxide of aluminum and water. The reaction mixture can be prepared utilizing materials which supply the appropriate oxides. Such compositions include aluminates, alumina, precipitated silica, silica hydrosol, silica precursor, silica gel, silicic acid and hydroxides. The reaction mixture can be prepared either batchwise or continuously.

Where it is desired to produce zeolite Beta with a silica-to-alumina ratio over 100, for example, in the range 200 to 1000, the silica source employed is preferably an amorphous precipitated silica. The precipitated silicas contain clustered solids which exhibit low viscosities even at high solids content in the synthesis mixture and have a solids (silica) content of at least 10 wt.%, preferably from 30 to 90 wt.%. Precipitated silica is formed from the vapor phase or by precipitation from solution such as sodium silicate solution. The process is described in more complete detail in Kirk-Othmer's "Encyclopedia of Chemical Technology" 3rd Ed., Vol. 20, p.p. 776 (John Wiley & Sons, 1982). The precipitated silica may range in particle size from 0.01 to 100 microns, preferably having a size of about 0.02 microns. The advantage of using a precipitated silica is that the reaction mixture has a higher solids content which effects cost reduction. Representative examples of commercially available precipitated silicas include the solid silicas, Ultrasil (a precipitated, spray dried silica containing about 90 wt.% silica), HiSil (a precipitated hydrated silica containing about 87 wt.% silica) and RTM.

A silica source which can also be used is an amorphous silica precipitate made from a solution of soluble silica source which is called a silica precursor. This silica precursor is described in U.S. Patent No. 4,983,275.

In preparing highly siliceous zeolite Beta using a precipitated silica, starter seeds are preferably included in the reaction mixture. The seeds are preferably highly siliceous and high purity zeolite Beta.

The reaction mixture also includes at least one organic directing agent and at least one organic chelating agent.

The organic directing agent is at least one tetraethylammonium compound or mixtures thereof: non-limiting examples of the directing agent include the hydroxide and/or the halide, e.g., tetraethylammonium hydroxide (TEAOH), tetraethylammonium bromide (TEABr), tetraethylammonium chloride and tetraethylammonium fluoride (TEAF).

The chelating agent is a tertiary alkanolamine and preferably is triethanolamine. However, other possible tertiary alkanolamines include triisopropanolamine, and 2,2-Bis(hydroxymethyl)-2,2',2''-nitrilotriethanol. Triethanolamine is described in Hawley's Condensed Chemical Dictionary, p.p. 1179-1180 N. I. Sax, et al, 11th Ed. (Van Nostrand Reinhold Company, N.Y. 1987).

The chelating agent allows a high silica content starting material, such as a precipitated silica, to be used in synthesizing the highly silicious zeolite Beta. The chelating agent helps to fluidize the high silica-content mixture which facilitates stirring or agitating the mixture during formation of the zeolite. The chelating agent also allows less water to be used in the synthesis mixture (i.e., H₂O/SiO₂, ranging from 5 to 10) which favors formation of a pure, fully crystalline material. Excess water is undesirable because it results in the formation of an impure product which contains materials other than zeolite Beta, such as ZSM-12. Although extra tetraethylammonium hydroxide can be used to supply adequate fluidity, it is not an economical alternative and does not dependably produce fully crystalline large crystals.

The reaction mixture employed in the process of the invention has the broad and preferred compositions, in terms of mole ratios, within the ranges recited in the following Table 1:

**TABLE 1**

| | Broad | Preferred |
|---|---|---|
| SiO₂/Al₂O₃ | = 20 - 1000 | 70 - 1000 |
| OH⁻/SiO₂ | = 0.1 - 0.8 | 0.2 - 0.4 |
| R/SiO₂ | = 0.3 - 1.0 | 0.3 - 0.9 |
| H₂O/SiO₂ | = 5 - 40 | 5 - 15 |
| M/SiO₂ | = 0.01 - 0.2 | 0.01 - 0.07 |
| X/SiO₂ | = 0.1 - 1.0 | 0.2 - 0.8 |
| R₁/R₁+R₂ | = 0.1 - 1.0 | 0.2 - 0.8 |
| R = organic nitrogen-containing cation R₁ = tetraethylammonium hydroxide; R₂ = tetraethylammonium halide; M = alkali metal cation; and X = tertiary alkanolamine. | | |

The zeolite Beta composition as prepared hereby can be identified, in terms of mole ratios of oxides and in the as synthesized anhydrous state, as follows: (3 to 60)R₂O:(0.5 to 12)M_{2/n}O:Al₂O₃:(20 to >1000)SiO₂ where M is the alkali metal cation and R represents organic cations from the organic directing agent and the chelating agent.

The zeolite Beta described herein is considered a large crystal material having been synthesized in crystal sizes from at least 0.1 to 0.2 microns ranging from 0.2 to 3.0 microns, more specifically from 0.2 to 2.0 microns. This is a significant advance in magnitude over the conventional small crystal zeolite Beta which ranges in crystal size from 0.01 to 0.05 microns.

The determination of crystal size, is described in more complete detail in U.S. Patent No. 4,828,679. Basically, crystal size is determined by conventional scanning electron microscopy (SEM) or transmission electron microscopy (TEM). The minimum crystal size of a given crystal is taken as the dimension of a reference. The amount of large crystal zeolite Beta synthesized in accordance with this invention can be present in predominant proportions; i.e., exceeding 50 wt. % and preferably may constitute up to 100 wt.% of the total zeolite synthesized.

The silica-to-alumina ratios referred to herein are the framework ratios. Thus, as known in the art, the ratio of the SiO₄ to the AlO₄ tetrahedra make up the structure of the zeolite Beta. The ratio may vary from the ratio determined by various known physical and chemical methods which are described more completely in U.S. Patent No. 4,419,220.

Crystallization of the material can be carried out at either static or stirred conditions. The agitation can vary from 0 to 400 rpms, in a suitable reactor vessel. Suitable vessels include polypropylene, teflon® coated or stainless steel autoclaves. The temperature used to effect crystallization preferably ranges from 70°C to 175°C, preferably about 140°C. The amount of time required for crystallization typically ranges from 16 hours to 90 days. Thereafter, the crystals are recovered.

The hydrogen form of the as-synthesized zeolite can be prepared by calcining in air in an inert atmosphere at a temperature ranging from 200°C to 900°C or higher and by exchanging the alkali metal cation.

The hydrogen form of the highly silicious zeolite has a low alpha value typically ranging from 1 to 50. When alpha value is examined, it is noted that the alpha value is an approximate indication of the catalytic cracking activity of the catalyst compared to a standard catalyst and it gives the relative rate constant (rate of normal hexane conversion per volume of catalyst per unit time). It is based on the activity of silica-alumina cracking catalyst taken as an Alpha of 1 (Rate Constant = 0.016 sec⁻¹). The alpha test is described in U.S. Patent 3,354,078; in the Journal of Catalysis, Vol. 4, p. 527 (1965); Vol. 6, p. 278 (1966); and Vol. 61, p. 395 (1980). The experimental conditions of the test used herein include a constant temperature of 538°C and a variable flow rate as described in detail in the Journal of Catalysis Vol. 61, p. 395. The higher alpha values correspond with a more active catalyst.

The original cation can be replaced, at least in part, by calcination and/or ion exchange with another cation. Thus, the original cations are exchanged into a hydrogen or hydrogen ion precursor form or a form in which the original cation has been replaced by a metal of Groups IIA, IIIA, IVA, IIIB, IVB, VIB or VIII of the Periodic Table of the Elements. Thus, for example, the original cations can be exchanged with ammonium cations or hydronium ions. Catalytically active forms of these would include, in particular, hydrogen, rare earth metals, aluminum metals of Groups II and VII of the Periodic Table and manganese. The original cation can be replaced by methods which include ion exchange, impregnation or by physical admixture.

Steaming, a known technique, can be used to increase the silica-to-alumina ratio of the zeolite Beta produced by the method of the invention. Steaming is conveniently conducted with 0.01 to 1.0 atm. of water in air at a temperature of at least 315°C (600°F), preferably at least 340°C (650°F), for about 1 to 48 hours, preferably 3 to 24 hours. To increase the silica-to-alumina ratio further the catalyst can be subjected to acid treatment with a mineral acid alone or along with the steam treatment. Such methods are described, in further detail in U.S. Patent No. 4,740,292.

It may be desirable to incorporate the zeolite Beta of the present invention into a material resistant to the temperature and other conditions employed in use. Such matrix materials include synthetic and naturally occurring substances, such as inorganic materials, e.g., clay, silica and metal oxides. The latter may be either naturally occurring or in the form of gelatinous precipitates or gels, including mixtures of silica and metal oxides. Naturally occurring clays can be composited with the zeolites, including those of the montmorillonite and kaolin families. These clays can be used in the raw state as originally mined or initially subjected to calcination, acid treatment or chemical modification to enhance their activity. The relative proportions of zeolite component and inorganic oxide gel matrix on an anhydrous basis may vary widely with the zeolite content ranging from 5 to 80, more usually 10 to 70 wt % of the dry composite. The matrix itself may possess catalytic properties, generally of an acidic nature.

In addition to the foregoing materials, the zeolite Beta catalyst can be composited with a porous matrix material such as silica-alumina, silica-magnesia, silica-zirconia, silica-thoria, silica-beryllia, silica-titania as well as ternary compositions such as silica-alumina-thoria, silica-alumina-zirconia, silica-alumina-magnesia and silica-magnesia-zirconia. The matrix can be in the form of a cogel. A mixture of these components can also be used. The relative proportions of the crystalline silicate and inorganic oxide gel matrix may vary widely with the crystalline silicate content ranging from 1 to 90 percent by weight, usually from 2 to 50 percent by weight of the composite.

The zeolite Beta of the present invention may be used in a wide variety of organic compound conversion reactions, notably cracking, hydrocracking, lubricant dewaxing, wax isomerization, olefin isomerization, oxygenate formation and olefin oligomerization.

In catalytic dewaxing, the base-exchanged highly silicious zeolite Beta will be most suitable. A catalytic dewaxing process using zeolite Beta is described in U.S. Patent No. 4,419,220. The process is preferably carried out in the presence of hydrogen at temperatures ranging from about 250°C to 500°C under conditions of pressure ranging from atmospheric to 25,000 kPa (3,600 psig), the higher pressures being preferred. The n-paraffins of the feed are isomerized to form branched chain products.

More preferably, the zeolite Beta of the instant invention is employed in the catalytic cracking, preferably fluidised catalytic cracking, of heavy hydrocarbon feedstocks, such as heavy gas oils. When used as a cracking catalyst, the zeolite is conveniently phosphorus-treated to improve its gasoline selectivity. Phosphorus-treatment is readily accomplished by contacting the catalyst with a solution of an appropriate phosphorus compound, for example, phosphoric acid, followed by drying and calcining to convert the phosphorus to its oxide form. In one embodiment, the method of phosphorus treatment includes adding a source of phosphorus to a zeolite or a clay slurry. The slurries can be mixed in any order, i.e., the zeolite slurry can be mixed with the phosphorus treated clay slurry or it can be treated with phosphorus and then mixed with the clay slurry. In any event the final slurry solids are adjusted to at least 25 weight %. The pH of the slurry can also be adjusted as necessary in order to meet the pH requirements of the system. The pH of the system is normally adjusted to ≦ 3, more preferably ≦ 2. After thorough mixing, the slurry is then spray dried and, preferably, calcined for example at a temperature of 200 to 650°C (400° to 1200°F) for 1 minute to 48 hours to yield a catalyst having, for example, 10 to 20 % zeolite, 70 to 85% clay and 5 to 10 wt.% phosphorus (as P₂O₅).

Catalytic cracking employing the zeolite Beta of the invention is carried out under conditions similar to those used conventionally. Process temperatures up to 650°C (1200°F) may conveniently be used, although temperatures above 595°C (1100°F) will normally not be employed. Generally, temperatures of 480 to 595°C (900° to 1100°F) will be employed. The catalyst-to-oil ratio is typically in a range of from 1:1 to 10:1, more preferably from 3:1 to 6:1.

In catalytic cracking, the zeolite Beta can be used as a stand alone or an additive catalyst along with another molecular sieve cracking component, typically a faujasite, representative examples of which include a Y-type zeolite such as REY, USY, RE-USY, dealuminated Y and silicon-enriched Y. The molecular sieve catalyst can also be ZSM-5. A more complete description of the use of zeolite Beta in cracking reactions can be found in U.S. Patent No. 4,740,292.

The method of making the instant zeolite Beta and use on hydrocarbon cracking reactions are illustrated in the following Examples. All parts and proportions in these Examples are by weight unless stated to the contrary. In the examples the product crystallinity is expressed as the ratio of the intensity of the reflection at two theta = 22.5°, 27°, 29.6° and 43-44° to that of a standard sample of crystalline zeolite Beta.

### EXAMPLE 1

Colloidal silica (30% solids), 101.4 parts, was added to a solution containing 1.0 part of sodium aluminate (43.3% Al₂O₃, 32.2 % Na₂O), 55.8 parts of 40% tetraethylammonium hydroxide solution (TEAOH), 64.8 parts of 50% tetraethylammonium bromide solution (TEABr) and 31.5 parts of tetraethylammonium bromide solid. To this was added 17.0 parts of triethanolamine (TEA).

The composition of the reaction mix was as follows, in mole ratios:

| | |
|---|---|
| SiO₂/Al₂O₃ | = 119 |
| OH⁻/SiO₂ | = 0.32 |
| R₁+R₂/SiO₂ | = 0.90 |
| H₂O/SiO₂ | = 15.0 |
| Na⁺/SiO₂ | = 0.02 |
| TEA/SiO₂ | = 0.22 |
| R₁/R₁+R₂ | = 0.33 |
| where R₁ = TEAOH and R₂ = TEABr. | |

The mixture was crystallized in a static reactor at 143°C for 8 days. The solid product was filtered, water washed and dried at 120°C.

The X-ray analysis showed the product to be zeolite Beta, 115% crystallinity. Scanning electron micrographs of the material showed crystals of 0.5-0.75 micron size. The chemical composition of the product was, in wt.%:

| | |
|---|---|
| C | 9.69 |
| N | 1.71 |
| Na | 0.45 |
| Al₂O₃ | 1.1 |
| SiO₂ | 75.6 |
| Ash | 77.7 |
| SiO₂/Al₂O₃ | 117 |

The sorption capacities, after calcining for 3 hours at 538°C were, in wt.%:

| | |
|---|---|
| Cyclohexane, 5.3 kPa (40 Torr) | 21.2 |
| n-Hexane, 5.3 kPa (40 Torr) | 17.9 |
| H₂O, 1.6 kPa (12 Torr) | 20.6 |
| Surface area, m²/g | 600 |

The product of this Example was determined to have the X-ray diffraction pattern shown below in Table 2:

**TABLE 2**

| 2-Theta | d(Angstroms) | I/Iₒ |
|---|---|---|
| 7.58 | 11.65 | 11 |
| 11.66 | 7.58 | 2 |
| 16.64 | 5.32 | 5 |
| 17.88 | 4.96 | 2 |
| 18.34 | 4.83 | 2 |
| 21.58 | 4.11 | 16 |
| 22.61 | 3.93 | 100 |
| 25.46 | 3.50 | 7 |
| 26.85 | 3.32 | 16 |
| 29.04 | 3.07 | 3 |
| 29.61 | 3.01 | 14 |
| 30.68 | 2.91 | 4 |
| 33.57 | 2.67 | 4 |
| 34.68 | 2.58 | 2 |
| 43.90 | 2.07 | 11 |
| 44.63 | 2.03 | 2 |
| 49.90 | 1.83 | 2 |
| 52.66 | 1.74 | 2 |
| 55.22 | 1.66 | 3 |

### EXAMPLE 2

Colloidal silica (30%) 84.2 parts, was added to a solution containing 1.0 parts sodium aluminate (43.3% Al₂O₃, 32.2% Na₂O), 73.7 parts H₂O, 6.8 parts tetraethylammonium fluoride (TEAF), 33.2 parts 40% tetraethylammonium hydroxide solution (TEAOH) and 10.5 parts triethanolamine (TEA).

The composition of the reaction mixture in mole ratios was as follows:

| | |
|---|---|
| SiO₂/Al₂O₃ | = 99 |
| OH⁻/SiO₂ | = 0.44 |
| R₁+R₂/SiO₂ | = 0.32 |
| H₂O/SiO₂ | = 20.6 |
| Na⁺/SiO₂ | = 0.22 |
| R₁/R₁+R₂ | = 0.66 |
| TEA/SiO₂ | = 0.17 |
| where R₁=TEAOH and R₂=TEAF. | |

The mixture was crystallized in a static reactor at 130°C for 21 days. The solid product was filtered, water washed and dried at 120°C.

Scanning electron micrographs of the material revealed crystals of 0.3-1.0 micron in size. The X-ray analysis of the product showed it to be zeolite Beta, 110% crystalline, with the characteristic lines shown in Table 3:

**TABLE 3**

| Interplanar d-Spacing (A) | Relative Intensity (I/Iₒ) |
|---|---|
| 11.5 ± 0.3 | M-S |
| 7.4 ± 0.2 | W |
| 6.6 ± 0.15 | W |
| 4.15 ± 0.1 | W |
| 3.97 ± 0.1 | VS |
| 3.00 ± 0.07 | W |
| 2.05 ± 0.05 | W |

The chemical composition of the product was in wt.%:

| | |
|---|---|
| N | = 1.62 |
| Na | = 0.29 |
| Al₂O₃ | = 2.8 |
| SiO₂ | = 74.5 |
| Ash | = 79.7 |
| SiO₂/Al₂O₃ | = 45.2 |

### EXAMPLE 3

Colloidal silica (30% SiO₂), 101.4 parts, was added to a solution containing sodium aluminate 1.0 parts, 55.8 parts 40% tetraethylammonium hydroxide (TEAOH) solution, 64.8 parts 50% tetraethylammonium bromide (TEABr) solution, 31.5 parts solid TEABr and 17.0 parts triethanolamine (TEA).

The composition of the reaction mixture in mole ratios was as follows:

| | |
|---|---|
| SiO₂/Al₂O₃ | = 119 |
| OH⁻/SiO₂ | = 0.32 |
| R₁+R₂/SiO₂ | = 0.90 |
| R₁/R₁+R₂ | = 0.33 |
| H₂O/SiO₂ | = 15.0 |
| Na⁺/SiO₂ | = 0.02 |
| TEA/SiO₂ | = 0.22 |
| where R₁ = TEAOH and R₂ = TEABr. | |

The mixture was crystallized in a static reactor at 140°C for 8 days.

The X-ray analysis of the washed, dried (120°C) material was zeolite Beta, 125% crystalline. The material had the characteristic X-ray diffraction shown in Table 2. Scanning electron micrographs showed crystals of 0.3-0.5 microns.

The chemical composition of the product was, in wt.%:

| | |
|---|---|
| N | = 1.70 |
| Na | = 0.53 |
| Al₂O₃ | = 1.2 |
| SiO₂ | = 75.2 |
| Ash | = 78.1 |
| SiO₂/Al₂O₃ | = 106 |

The sorption capacities, after calcining for 16 hours at 538°C were, in wt.%:

| | |
|---|---|
| Cyclohexane, 5.3 kPa (40 Torr) | 20.6 |
| n-Hexane, 5.3 kPa (40 Torr) | 18.1 |
| H₂O, 1.6 kPa (12 Torr) | 15.5 |
| Surface area, m²/g | 617 |

The zeolite Beta crystals of this example were used to produce a catalyst for the cracking comparison detailed in Example 12 below. A slurry containing 150 g of the dried zeolite Beta crystals and 0.9 g of Maraspere N-22 dispersant (Reed-Lignin, Inc.) were diluted to 33% solids with deionized water and ball-milled for 16 hours in a one gallon porcelain ballmill containing agate stones. After ball-milling, the slurry was recovered; rinse water was added to the slurry to reduce the solids content to 20 wt.%. 2043.6 g of a kaolin slurry was prepared containing 781.4 g of kaolin. An H₃PO₄ solution was prepared by adding 109.8 grams of 86.1% H₃PO₄ to 789.6 g of deionized water. The H₃PO₄ solution was added to the zeolite slurry over a 15 minute period. The pH of the phosphoric acid-treated zeolite slurry was 1.6. Next, the phosphoric acid/zeolite slurry was added to the kaolin slurry over an 11 minute period with stirring. After stirring for an additional 15 minutes, 400.5 g of deionized water were added; the pH was 1.8. Deionized water was added to adjust the solids percent of the slurry to 25%. After homogenization, the slurry wais spray dried. The resulting catalyst was calcined for 3 hours at 650°C (1200°F) in air. The catalyst was steam-deactivated at 790°C (1450°F) for 10 hours in 45% steam, 55% air at 103 kPa (0 psig).

### EXAMPLE 4

Ultrasil, precipitated silica, 11.5 parts, was added to a solution containing 1 part 50% NaOH solution, 40% tetraethylammonium hydroxide (TEAOH) solution 20.3 parts, triethanolamine (TEA) 17.3 parts and H₂O 4.92 parts. To this mixture was added 1.18 parts of zeolite Beta seeds (78% solids, 110/1 SiO₂/Al₂O₃). The mixture had the following composition in mole ratios:

| | |
|---|---|
| OH⁻/SiO₂ | = 0.39 |
| R/SiO₂ | = 0.32 |
| H₂O/SiO₂ | = 5.65 |
| Na⁺/SiO₂ | = 0.07 |
| TEA/SiO₂ | = 0.67 |
| Where R= TEAOH. | |

Any alumina present existed as an impurity in the silica source.

The mixture was crystallized, with stirring, 300 rpm, for 16 hours at room temperature, followed by 10 days at 135°C. The X-ray analysis showed the product to be zeolite Beta, 95% crystalline, with a trace of unidentified crystalline material. The scanning electron micrographs showed the material to be 0.3-0.8 microns in size.

The chemical composition of the product was, in wt.%:

| | |
|---|---|
| N | 1.61 |
| Na | 1.1 |
| Al₂O₃ | 0.20 |
| SiO₂ | 75.5 |
| Ash | 78.4 |
| SiO₂/Al₂O₃ | 642 |

The sorption capacities, after calcining for 3 hours at 538°C were, in wt.%:

| | |
|---|---|
| Cyclohexane, 5.3 kPa (40 Torr) | 13.5 |
| n-Hexane, 5.3 kPa (40 Torr) | 10.8 |
| H₂O, 1.6 kPa (12 Torr) | 4.9 |
| Surface area, m²/g | 333 |

A fluid catalyst was prepared by spray drying an aqueous slurry containing 15 wt.% of the zeolite Beta of this example in a 65% SiO₂-Al₂O₃ (93/7)/35% clay slurry. The resulting catalyst was ammonium exchanged and dried. The catalyst was steam deactivated at 790°C (1450°F) for 10 hours in 45% steam/55% air.

### EXAMPLE 5

This example demonstrates the preparation of the high silica, high purity seeds used in several of the examples.
33.8 Parts of Ultrasil 90% solids, precipitated silica, were added to a solution containing 1 part of sodium aluminate (43.3% Al₂O₃, 32.2% Na₂O), 55.8 parts of 40% tetraethylammonium hydroxide solution (TEAOH) and 127.9 parts of 50% tetraethylammonium bromide (TEABr) solution. The composition of the reaction mixture in mole ratios was:

| | |
|---|---|
| SiO₂/Al₂O₃ | = 119 |
| OH⁻/SiO₂ | = 0.32 |
| R₁+R₂/SiO₂ | = 0.90 |
| H₂O/SiO₂ | = 10.7 |
| Na⁺/SiO₂ | = 0.02 |
| R₁/R₁+R₂ | = 0.33 |
| where R₁ = TEAOH, R₂ = TEABr | |

The mixture was crystallized at 138°C, 45 rpm, for 51 hours. At that time, x-ray analysis showed it was beta zeolite, 110% crystalline.

The chemical composition of the product was, in wt. %:

| | |
|---|---|
| N | 2.01 |
| Na | 0.59 |
| Al₂O₃ | 0.98 |
| SiO₂ | 74.3 |
| Ash | 76.9 |
| SiO₂/Al₂O₃ | 129 |

The sorption capacities, after calcining for three hours at 538°C were, in wt. %:

| | |
|---|---|
| Cyclohexane, 5.3 kPa (40 Torr) | 22.1 |
| H₂O, 1.6 kPa (12 Torr) | 15.0 |
| Surface Area, m²/g | 681 |

### EXAMPLE 6

Ultrasil, 90% solids 11.5 parts, was added to a solution containing one part of 50% NaOH solution, 20.3 parts of 40% TEAOH solution, 17.3 parts of triethanolamine (TEA) and 4.92 parts of H₂O. To this slurry, was added 1.13 parts of the seeds from example 5. The mixture had the following composition in mole ratios:

| | |
|---|---|
| OH⁻/SiO₂ | = 0.39 |
| R_{/SiO2} | = 0.32 |
| H₂O/SiO₂ | = 5.6 |
| Na⁺/SiO₂ | = 0.07 |
| TEA/Si | = 0.67 |

The mixture was crystallized at 45 rpm, for 16 hours at room temperature, followed by 23 hours at 138°C. The x-ray analysis of the washed, dried (120°C) product was beta zeolite, 105% crystalline.

The chemical composition of the product was, in wt. %:

| | |
|---|---|
| N | 1.91 |
| Na | 0.36 |
| Al₂O₃, ppm | 1580 |
| SiO₂ | 72.3 |
| SiO₂/Al₂O₃ | 778 |

The sorption capacities, after calcining for three hours at 538°C were, in wt. %:

| | |
|---|---|
| Cyclohexane, 5.3 kPa (40 Torr) | 20.0 |
| H₂O, 1.6 kPa (12 Torr) | 7.2 |
| Surface Area, m²/g | 501 |

A portion of the product of this example was calcined in air for three hours at 538°C, ammonium exchanged and converted to the hydrogen form. It had an alpha value of 12.

### EXAMPLE 7

The same reactants as in Example 6 were used, except that 0.75 parts of Example 5 seeds were used. The mixture was crystallized at 45 rpm for 16 hours at room temperature, followed for 28 hours at 138°C. The x-ray analysis of the washed product showed zeolite beta, 100% crystalline.
The chemical composition of the product was, in wt. %:

| | |
|---|---|
| N | 1.85 |
| Na | 0.78 |
| Al₂O₃ | 0.27 |
| SiO₂ | 73.8 |
| Ash | 77.1 |
| SiO₂/Al₂O₃ | 465 |

The sorption capacities, after calcining for three hours at 538°C were, in wt. %:

| | |
|---|---|
| Cyclohexane, 5.3 kPa (40 Torr) | 21.7 |
| H₂O, 1.6 kPa (12 Torr) | 16.0 |

A portion of the material obtained in this example was calcined in air, ammonium exchanged and converted to the hydrogen form. The alpha value of the zeolite Beta of this example was 7.

### EXAMPLE 8

The procedure of example 6 was repeated, except that 0.56 parts of Example 5 seeds were used. The mixture was crystallized for 16 hours at room temperature followed by 40 hours at 138°C. The washed product was identified as beta zeolite, 100% crystalline.

The chemical composition of the product was, in wt. %:

| | |
|---|---|
| N | 1.86 |
| Na | 0.82 |
| Al₂O₃ | 0.23 |
| SiO₂ | 71.3 |
| Ash | 72.5 |
| SiO₂/Al₂O₃ | 527 |

The sorption capacities, after calcining for three hours at 538°C were, in wt. %:

| | |
|---|---|
| Cyclohexane, 5.3 kPa (40 Torr) | 18.9 |
| H₂O, 1.6 kPa (12 Torr) | 14.6 |
| Surface Area, m²/g | 527 |

The hydrogen form material of this example had an alpha value of 2.

### EXAMPLE 9

This example demonstrates self-seeding. The same reactants shown in example 6 were used, except that 0.56 parts of beta zeolite synthesized in example 6 were used to seed the reaction. The mixture was crystallized at 45 rpm for 16 hours at room temperature, followed by 143 hours at 138°C. The washed product was beta zeolite, 80% crystalline.

The chemical composition of the product was, in wt. %:

| | |
|---|---|
| N | 2.0 |
| Na | 1.6 |
| Al₂O₃, ppm | 1390 |
| SiO₂ | 77.7 |
| SiO₂/Al₂O₃ | 950 |

### EXAMPLE 10

This is a comparative example which shows the importance of using high purity, high silica to alumina seeds.

The same reactants of example 6 were used. The seeds used were 1.13 parts of beta zeolite 65% crystalline, 38/1 silica to alumina. The mixture was crystallized 16 hours at room temperature, followed by 10 days at 138°C. The product was analyzed as a mixture of beta zeolite and ZSM-12.

### EXAMPLE 11

This example demonstrates that a mixture of TEABr and TEAOH can be used in the synthesis. This would reduce production cost.

One part of 50% NaOH solution was added to a solution containing 15.2 parts of 40% TEAOH solution and 5.8 parts of 50% TEABr solution and 4.9 parts of H₂O. 17.4 parts of TEA were added, followed by 11.6 parts of precipitated silica and 1.2 parts of beta seeds (118/1 SiO₂/Al₂O₃). The composition of the reaction mixture in mole ratios was:

| | |
|---|---|
| OH⁻/SiO₂ | = 0.31 |
| R₁+R₂/SiO₂ | = 0.32 |
| H₂O/SiO₂ | = 5.6 |
| Na⁺/SiO₂ | = 0.07 |
| TEA/SiO₂ | = 0.67 |
| R₁/R₁+R₂ | = 0.75 |

The mixture was crystallized with stirring for 16 hours at room temperature followed by 10 days at 132°C. The product was analyzed as 100% beta zeolite.

The chemical composition of the product was, in wt. %:

| | |
|---|---|
| N | 1.65 |
| Na | 0.97 |
| Al₂O₃ | 0.22 |
| SiO₂ | 74.4 |
| SiO₂/Al₂O₃ | 575 |

The sorption capacities, after calcining for three hours at 538°C were, in wt. %:

| | |
|---|---|
| Cyclohexane, 5.3 kPa (40 Torr) | 21.1 |
| H₂O, 1.6 kPa (12 Torr) | 6.9 |
| Surface area, m²/g | 645 |

### EXAMPLE 12

In this example, catalysts produced from the zeolite Beta products of Examples 1, 3 and 4 were compared with a conventional zeolite Beta catalyst and an REY catalyst for the cracking of a Sour Heavy Gas Oil having the specifications as detailed in Table 4:

**TABLE 4**

| **PROPERTIES OF A SOUR HEAVY GAS OIL** | |
|---|---|
| Pour Point, °F (°C) | 90 (32) |
| CCR, wt.% | 0.54 |
| KV @40°C | N/A Waxy |
| KV @100°C | 8.50 |
| Aniline Point, °F (°C) | 170.5 (77) |
| Bromine Number | 8.7 |
| Carbon, wt.% | 87.1 |
| Hydrogen, wt.% | 12.1 |
| Sulfur, wt.% | 2.4 |
| Nitrogen, wt.% | 0.41 |
| Basic Nitrogen, ppm | 382 |
| Nickel, ppm | 0.3 |
| Vanadium, ppm | 0.4 |
| Iron, ppm | 0.3 |
| Copper, ppm | 20 |
| Sodium, ppm | 1.3 |

The following catalysts were used in the comparison:

### CATALYST A

A base catalyst was employed in form of a commercially available, REY-type catalyst which had been removed from a commercial FCC unit following oxidative regeneration. The regenerated REY catalyst is designated as Catalyst A.

### CATALYST B

A further comparative catalyst was prepared from a commercially available small crystal zeolite Beta having the following chemical composition in wt% in the ammonium-exchanged form:

| | |
|---|---|
| C | 9.8 |
| N | 3.2 |
| Na | 0.05 |
| Al₂O₃ | 3.7 |
| SiO₂ | 70.5 |
| Ash | 75.4 |
| SiO₂/Al₂O₃ | 32 |

A fluid catalyst was prepared by spray drying an agueous slurry containing 25 wt.% of the small crystal zeolite Beta in a 65% SiO₂-Al₂O₃ (93/7)/35% clay slurry. The resulting catalyst was ammonium exchanged and dried. The catalyst was steam deactivated at 790°C (1450°F) for 10 hours in 45% steam, 55% air at 0 psig. The resultant catalyst was blended to an additive concentration of 3 wt.% with the REY-type zeolite (Catalyst A). This catalyst is designated as Catalyst B.

### CATALYST C

The steamed large crystal zeolite Beta catalyst of the instant invention synthesized as described in Example 1 was blended to an additive concentration of 3 wt.% with the REY-type zeolite (Catalyst A). This catalyst is designated as Catalyst C.

### CATALYST D

The phosphorus-treated large crystal zeolite Beta catalyst synthesized as described in Example 3 was blended to an additive concentration of 3 wt.% with the REY-type catalyst (Catalyst A). This catalyst is designated as Catalyst D.

### CATALYST E

The steamed large crystal zeolite Beta catalyst synthesized as described in Example 4 was blended to an additive concentration of 1 wt.% with the REY-type catalyst (Catalyst A). This catalyst is designated as Catalyst E.

Catalysts A, B, C, D and E were evaluated for their ability to crack the gas oil of Table 4 in a fixed, fluidized-bed (FFB) unit at 515°C (960°F) over a range of catalyst/oil ratios. The performance of these catalysts (at 65 vol.% conversion) were determined via interpolation and the performance results are presented in Table 5. Catalyst C was evaluated on three separate occasions, while Catalyst D was evaluated on two occasions. As the data indicate, both catalysts consistently exhibited good performance characteristics.

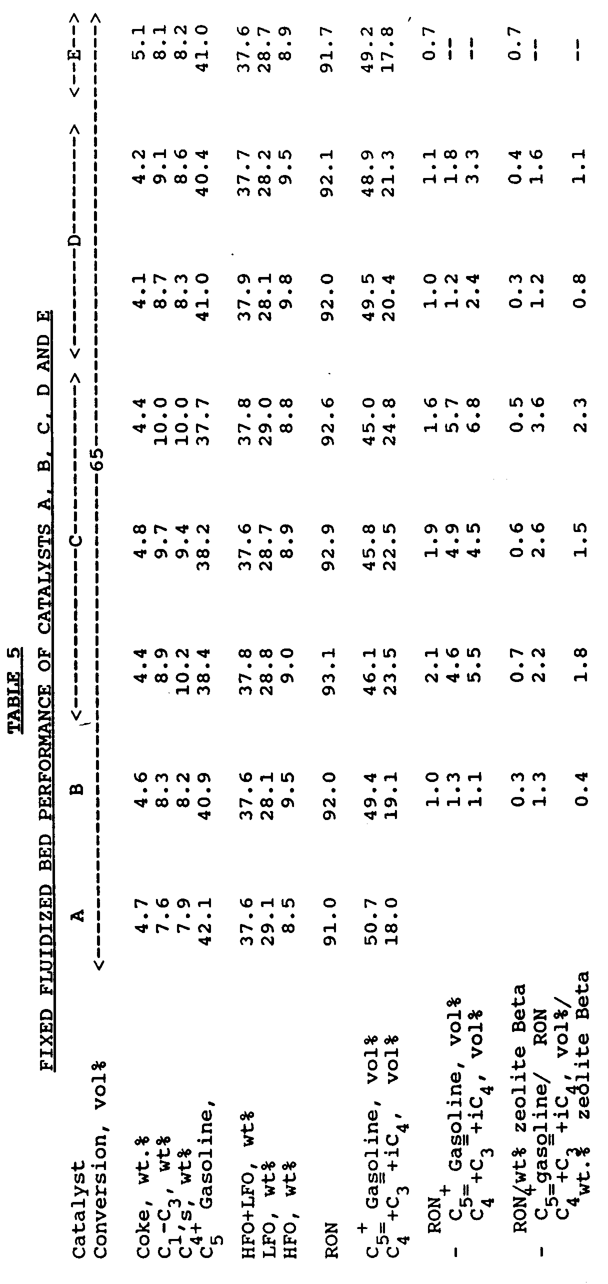

The performance results, reported in Table 5, show that catalyst C increased production of C₃ and C₄ olefins and iC₄ and exhibited an increased activity for octane enhancement as compared to catalysts A and B. Although it is expected that the different acidity influences catalytic activity, the spatial distribution of aluminum in the larger crystal zeolite should influence the selectivity since the diffusion path length must play a significant role in the conversion reactions. The additional loss in C₅+ gasoline is offset by the increased production of gasoline and alkylate. The increase in octane gain and light olefins is beneficial to refiners with olefin processing capabilities.

Catalyst D, the phosphorus-treated zeolite Beta, reduces octane gain, i.e. is less active for octane enhancement than C ( RON/wt%) but is more selective (- C₅⁺ gasoline/ RON), than catalyst C. The phosphorus-treated zeolite Beta catalyst D exhibits comparable selectivity (- C₅⁺ gasoline/ RON) as catalyst B. However, the advantage of phosphorus treatment is that catalyst D is a large crystal zeolite Beta which is more hydrothermally stable than the smaller crystal zeolite, catalyst B.

Catalyst C is preferred for refineries with C₃/C₄ olefin processing capabilities. Yet treatment of this catalyst with a source of phosphorus as exemplified by catalyst D allows the catalyst to be useful in refineries with limited C₃/C₄ olefin processing capabilities.

The performance results show that Catalysts B and E exhibit similar activity for octane enhancement. However, it will be noted that Catalyst E contains only 1 wt.% of the large crystal zeolite Beta while Catalyst B contains 3 wt.% of the smaller crystal zeolite Beta. Thus, smaller amounts of the large crystal zeolite Beta are effective making it an economically more advantageous alternative. Olefin production with catalyst E is reduced over catalyst B which is attributed to the higher silica-to-alumina ratio of the larger crystal material.

## Claims

1. A method of synthesizing zeolite Beta which comprises forming a synthesis mixture containing sources of alkali metal cation, tetraethylammonium cation, an oxide of aluminum, an oxide of silicon, a tertiary alkanolamine and water and having a composition, in terms of mole ratios within the following ranges:
| | |
|---|---|
| SiO₂/Al₂O₃ | = 20 - 1000 |
| OH⁻/SiO₂ | = 0.1 - 0.8 |
| R/SiO₂ | = 0.3 - 1.0 |
| H₂O/SiO₂ | = 5 - 40 |
| M/SiO₂ | = 0.01 - 0.2 |
| X/SiO₂ | = 0.1 - 1.0 |
| wherein R is the tetraethylammonium cation and X is the tertiary alkanolamine, and crystallizing the mixture. | |

2. The method of claim 1 in which the reaction mixture has a composition, in terms of mole ratios within the following ranges:
| | |
|---|---|
| SiO₂/Al₂O₃ | = 70 - 1000 |
| OH⁻/SiO₂ | = 0.2 - 0.4 |
| R/SiO₂ | = 0.3 - 0.9 |
| H₂O/SiO₂ | = 5 - 15 |
| M/SiO₂ | = 0.2 - 0.8 |
| X/SiO₂ | = 0.2 - 0.8. |

3. The method of claim 1 or claim 2 in which the source of oxide of silicon is a colloidal silica or a precipitated silica.

4. The method of any one of claims 1 to 3 wherein the the tertiary alkanolamine is triethanolamine.

5. The method of any one of claims 1 to 4 in which crystallization of the reaction mixture is conducted at a temperature of 70°C to 175°C for 16 hours to 90 days.

6. The method of any one of claims 1 to 5 in which the reaction mixture contains seeds of crystalline zeolite Beta.

7. A catalytic cracking process comprising contacting a hydrocarbon feed in the absence of added hydrogen to produce gasoline and olefins with a cracking catalyst comprising zeolite Beta synthesized by a method as claimed in any preceding claim.

8. The process of claim 7 in which the cracking catalyst comprises a further zeolitic component.

9. The process of claim 8 in which the further zeolitic component is a faujasite or ZSM-5.

10. The process of any one of claims 7 to 9 in which the zeolite Beta is treated with a source of phosphorus.

## Patentansprüche

1. Verfahren zum Synthetisieren von Zeolith Beta, welches umfaßt:
Erzeugen einer Synthesemischung, die Quellen eines Alkalimetallkations, eines Tetraethylammoniumkations, eines Oxids von Aluminium, eines Oxids von Silicium, eines tertiären Alkanolamins und Wasser enthält und eine auf die Molverhältnisse bezogene Zusammensetzung innerhalb der folgenden Bereiche aufweist:
| | |
|---|---|
| SiO₂/Al₂O₃ | = 20 - 1000 |
| OH⁻/SiO₂ | = 0,1 - 0,8 |
| R/SiO₂ | = 0,3 - 1,0 |
| H₂O/SiO₂ | = 5 - 40 |
| M/SiO₂ | = 0,01 - 0,2 |
| X/SiO₂ | = 0,1 - 1,0 |
| worin R das Tetraethylammoniumkation und X das tertiäre Alkanolamin ist, und Kristallisieren der Mischung. | |

2. Verfahren nach Anspruch 1, wobei die Reaktionsmischung eine auf die Molverhältnisse bezogene Zusammensetzung innerhalb der folgenden Bereiche aufweist:
| | |
|---|---|
| SiO₂/Al₂O₃ | = 70 - 1000 |
| OH⁻/SiO₂ | = 0,2 - 0,4 |
| R/SiO₂ | = 0,3 - 0,9 |
| H₂O/SiO₂ | = 5 - 15 |
| M/SiO₂ | = 0,2 - 0,8 |
| X/SiO₂ | = 0,2 - 0,8 |

3. Verfahren nach Anspruch 1 oder Anspruch 2, wobei die Quelle des Oxids von Silicium kolloidales Siliciumdioxid oder gefälltes Siliciumdioxid ist.

4. Verfahren nach einem der Ansprüche 1 bis 3, wobei das tertiäre Alkanolamin Triethanolamin ist.

5. Verfahren nach einem der Ansprüche 1 bis 4, wobei das Kristallisieren der Reaktionsmischung 16 Stunden bis 90 Tage bei einer Temperatur von 70 bis 175°C erfolgt.

6. Verfahren nach einem der Ansprüche 1 bis 5, wobei die Reaktionsmischung Keime von kristallinem Zeolith Beta enthält.

7. Katalytisches Crackverfahren, das den Kontakt einer Kohlenwasserstoffbeschickung ohne zugesetzten Wasserstoff, wodurch Benzin und Olefine erzeugt werden, mit einem Crackkatalysator umfaßt, der den nach einem Verfahren nach einem der vorstehenden Ansprüche synthetisierten Zeolith Beta umfaßt.

8. Verfahren nach Anspruch 7, wobei der Crackkatalysator eine weitere Zeolithkomponente umfaßt.

9. Verfahren nach Anspruch 8, wobei die weitere Zeolithkomponente Faujasit oder ZSM-5 ist.

10. Verfahren nach einem der Ansprüche 7 bis 9, wobei der Zeolith Beta mit einer Phosphorquelle behandelt wird.

## Revendications

1. Un procédé de synthèse de zéolite béta qui comprend la formation d'un mélange de synthèse contenant des sources d'un cation de métal alcalin, d'un cation tétraéthylammonium, d'un oxyde d'aluminium, d'un oxyde de silicium, d'une alcanolamine tertiaire et d'eau, et qui présente une composition, exprimée en termes de rapports molaires, comprise dans les domaines suivants:
| | |
|---|---|
| SiO₂/Al₂O₃ | = 20 - 1000 |
| OH⁻/SiO₂ | = 0,1 - 0,8 |
| R/SiO₂ | = 0,3 - 1,0 |
| H₂O/SiO₂ | = 5 - 40 |
| M/SiO₂ | = 0,01 - 0,2 |
| X/SiO₂ | = 0,1 - 1,0 |
| dans laquelle: R est le cation tétraéthylammonium, et X est l'alcanolamine tertiaire; et la cristallisation du mélange obtenu. | |

2. Le procédé selon la revendication 1, dans lequel le mélange réactionnel présente une composition, exprimée en rapports molaires, comprise dans les domaines suivants:
| | |
|---|---|
| SiO₂/Al₂O₃ | = 70 - 1000 |
| OH⁻/SiO₂ | = 0,2 - 0,4 |
| R/SiO₂ | = 0,3 - 0,9 |
| H₂O/SiO₂ | = 5 - 15 |
| M/SiO₂ | = 0,2 - 0,8 |
| X/SiO₂ | = 0,2 - 0,8 |

3. Le procédé selon la revendication 1 ou la revendication 2, dans lequel la source d'oxyde de silicium est une silice colloïdale ou une silice précipitée.

4. Le procédé selon l'une quelconque des revendications 1 à 3, dans lequel l'alcanolamine tertiaire est la triéthanolamine.

5. Le procédé selon l'une quelconque des revendications 1 à 4, dans lequel la cristallisation du mélange réactionnel est effectuée à une température de 70°C à 175°C durant 16 heures à 90 jours.

6. Le procédé selon l'une quelconque des revendications 1 à 5, dans lequel le mélange réactionnel contient des germes de zéolite béta cristalline.

7. Un procédé de craquage catalytique comprenant le contact d'une charge hydrocarbonée en l'absence d'addition d'hydrogène pour produire de l'essence et des oléfines, à l'aide d'un catalyseur de craquage comprenant une zéolite béta synthétisée par une méthode telle que revendiquée dans l'une quelconque des revendications précédentes.

8. Le procédé selon la revendication 7, dans lequel le catalyseur de craquage comprend un constituant zéolitique supplémentaire.

9. Le procédé selon la revendication 8, dans lequel le constituant zéolitique supplémentaire est une faujasite ou de la ZSM-5.

10. Le procédé selon l'une quelconque des revendications 7 à 9, dans lequel la zéolite béta est traitée par une source de phosphore.
